# EUROPÄISCHE PATENTANMELDUNG

(11) **EP 2 159 035 A2**
(43) Veröffentlichungstag der Anmeldung: **03.03.2010**
(21) Anmeldenummer: 09165393.1
(22) Anmeldetag: 14.07.2009
(51) Int. Cl.: B29C 49/20, B29C 49/04

(54) **Verfahren und Vorrichtung zur Herstellung eines blasgeformten, mit wenigstens einem Verstärkungselement versehenen Kunststoffhohlkörpers**

(30) Priorität: 21.08.2008 DE 102008039134
(71) Anmelder: Röchling Automotive AG & Co. KG, 68165 Mannheim (DE)
(72) Erfinder: Chini, Fabrizio, 38060, Isera (IT); Mosca, Devid, 39051, Bronzolo (IT); Farina, Werner, 39100, Bozen (IT)
(74) Vertreter: Trossin, Hans-Jürgen

(57) **Zusammenfassung**

Die vorliegende Erfindung betrifft ein Verfahren zur Herstellung eines mit wenigstens einem Verstärkungselement (28; 128) versehenen Kunststoffhohlkörpers in einem Formwerkzeug (14; 114), umfassend die folgenden Schritte:
Einbringen eines Hohlkörperrohlings (38; 138) aus thermoplastischem Kunststoff im plastisch verformbaren Zustand in eine Blasformkavität (16; 116) des Formwerkzeugs (14; 114).
Blasformen des Hohlkörperrohlings (38; 138) in der Blasformkavität (16; 116) zu dem Kunststoffhohlkörper, Vorsehen des wenigstens einen Verstärkungselements (28; 128) an dem den Kunststoffhohlkörper bildenden Kunststoff, wobei das Verfahren vor dem Blasformen folgenden zusätzlichen Schritt umfasst:
Einlegen des wenigstens einen Verstärkungselements (28; 128) in die Blasformkavität (16; 116), so dass sich der den Kunststoffhohlkörper bildende Kunststoff zum Vorsehen des wenigstens einen Verstärkungselements (28; 128) an dem Kunststoffhohlkörper während des Blasformens dem wenigstens einen Verstärkungselement (28; 128) zur Herstellung einer Verbindung mit diesem annähert.

## Beschreibung

Die vorliegende Erfindung betrifft ein Verfahren zur Herstellung eines mit wenigstens einem Verstärkungselement versehenen Kunststoffhohlkörpers in einem Formwerkzeug, umfassend die folgenden Schritte:
Einbringen eines Hohlkörperrohlings aus thermoplastischem Kunststoff im plastisch verformbaren Zustand in eine Blasformkavität des Formwerkzeugs, Blasformen des Hohlkörperrohlings in der Blasformkavität zu dem Kunststoffhohlkörper,
Vorsehen des wenigstens einen Verstärkungselements an dem den Kunststoffhohlkörper bildenden Kunststoff.

Weiterhin betrifft die vorliegende Erfindung eine Vorrichtung zur Durchführung des erfindungsgemäßen Verfahrens, umfassend ein Formwerkzeug mit einer Blasformkavität und eine Blasvorrichtung zum Blasformen eines Hohlkörperrohlings in der Blasformkavität.

Blasgeformte Wellrohre aus Kunststoff ohne Verstärkungselemente sind z.B. aus der Druckschrift DE 197 07 518 C1 bekannt.

Weiterhin ist aus der Druckschrift WO 2004/022312 A1 ein Verfahren zum Herstellen von Kunststoffartikeln durch eine Kombination von Spritzgießverfahren und Blasformverfahren in einem Formwerkzeug bekannt, wobei Blasformkavität und Spritzgießkavität in Strömungsverbindung miteinander stehen.

Aus der Druckschrift DE 10 2004 037 088 B3 ist ein flexibler Schlauch bekannt, der mit einem ringförmigen Verstärkungselement aus Metall oder Kunststoff, oder mit Verstärkungsschichten, insbesondere Gewebeschichten, oder mit einer Außenschicht mit variabler Schichtstärke, insbesondere aus elastomerem Material, versehen ist. Der Druckschrift sind jedoch keine Angaben hinsichtlich des Verfahrens zu entnehmen, mit dem die Verstärkungselemente, Verstärkungsschichten bzw. Außenschichten auf den flexiblen Schlauch aufgebracht bzw. daran vorgesehen werden.

Die Druckschrift DE 10 2005 034 389 A1 offenbart ein Verfahren zum Aufbringen einer Stabilisierungseinrichtung auf einem Wellschlauch. Dabei weist die Stabilisierungseinrichtung wenigstens ein Ringsegment, vorzugsweise mehrere miteinander verbundene Ringsegmente auf, wobei die Ringsegmente eine netzartige Struktur aufweisen, insbesondere eine gestrickte, gewebte oder geflochtene Struktur. Diese netzartige Struktur ist aus Metall- oder Kunststofffäden oder aus Naturfasern gebildet. Das Aufbringen der Stabilisierungseinrichtung auf den Wellschlauch kann dabei durch kontinuierliches Umstricken des Wellschlauchs bzw. ein entsprechendes Wirk-, Web- oder Flechtverfahren erfolgen. Weiterhin ist in der Druckschrift vorgeschlagen, die Stabilisierungseinrichtung über den Wellschlauch zu ziehen. Dabei wird insbesondere vorgeschlagen, dass der Wellschlauch aus einem elastomeren Material besteht und dass das Aufbringen der Stabilisierungseinrichtung auf den Schlauch erfolgt, wenn sich der Schlauch in einem rohen Zustand befindet, insbesondere dann, wenn der Schlauch im rohen Zustand noch keine Wellungen aufweist. Nach dem Aufbringen der Stabilisierungseinrichtung wird dem Schlauch dann die gewünschte Kontur angeformt bzw. aufgeprägt und die gewünschte Kontur des Wellschlauchs wird anschließend durch Vulkanisieren fixiert. Die Druckschrift enthält jedoch keine genaueren Angaben zum Aufbringen der Stabilisierungseinrichtung bzw. zum Anformen bzw. Aufprägen der gewünschten Kontur auf den Schlauch.

Aus der Druckschrift DE 26 47 542 A1 ist weiterhin ein Verfahren zum Herstellen eines Wellrohrs aus flexiblem Kunststoff mit in den Wellenvertiefungen liegenden Verstärkungsringen bekannt. Hierbei wird ein Rohr verwendet, dessen Außendurchmesser zunächst größer ist als der Innendurchmesser der verwendeten Verstärkungsringe. Der Durchmesser dieses Rohres wird dann durch Verformung unter Erhaltung des Rückstellbestrebens derart reduziert, dass die Verstärkungsringe über das Rohr mit reduziertem Außendurchmesser geschoben werden können. Anschließend wird das Rohr unter Einfluss der nach außen gerichteten Rückstellkräfte, gegebenenfalls unterstützt durch Erwärmung, einen inneren Pressdruck oder eine axiale Verkürzung des Rohres radial aufgeweitet. Auf diese Weise entsteht ein Wellrohr mit in den Wellenvertiefungen liegenden Verstärkungsringen.

Schließlich ist aus der Druckschrift DE 14 79 381 ein gattungsgemäßes Verfahren und eine gattungsgemäße Vorrichtung zum Herstellen von Hohlkörpern aus thermoplastischem Material bekannt. Hierbei wird ein abschnittsweise blasgeformter Hohlkörper aus einem thermoplastischen Material unter Verwendung eines Blas- und/oder Kalibrierdorns in einem Teilbereich durch Überspritzen mit thermoplastischem Material verstärkt. Dabei erfolgt die Verstärkung in einem Bereich des Kunststoffhohlkörpers, der von innen durch den Blas- oder Kalibrierdorn unterstützt wird und der vom blasgeformten Bereich des Kunststoffhohlkörpers durch umlaufende Stauringe räumlich getrennt ist. Die Verstärkung des Kunststoffhohlkörpers durch Spritzgießen erfolgt also gerade in einem Bereich des Kunststoffhohlkörpers, der nicht durch Blasformen geformt wird.

Ein Nachteil der aus dem Stand der Technik bekannten Lehre besteht darin, dass das Vorsehen des Verstärkungselementes an dem Kunststoffgegenstand und die Herstellung des Kunststoffgegenstandes durch Blasformen in separaten Arbeitsschritten erfolgen, was zu einem zeitlich und wirtschaftlich unerwünscht hohen Arbeitsaufwand führt. Weiterhin muss, etwa wie im in der Druckschrift DE 10 2005 034 389 A1 beschriebenen Verfahren zum Aufbringen einer Stabilisierungseinrichtung auf einen Wellschlauch durch Umstricken, die Art des Vorsehens des Verstärkungselementes an dem Kunststoffgegenstand sowohl an die Art des Verstärkungselementes als auch an die Form des Kunststoffgegenstandes angepasst werden.

Daher ist es die Aufgabe der vorliegenden Erfindung, eine technische Lehre anzugeben, gemäß welcher im Vergleich zum Stand der Technik ein mit wenigstens einem Verstärkungselement versehener Kunststoffhohlkörper zeit- und kostengünstiger herstellbar ist und welche weiterhin die Verwendung einer großen Anzahl verschiedener Formen und Ausgestaltungen von Kunststoffhohlkörper und Verstärkungselement gestattet.

Gemäß einem ersten Gesichtspunkt der vorliegenden Erfindung wird diese Aufgabe durch ein gattungsgemäßes Verfahren gelöst, welches vor dem Blasformen folgenden zusätzlichen Schritt umfasst:
Einlegen des wenigstens einen Verstärkungselements in die Blasformkavität, so dass sich der den Kunststoffhohlkörper bildende Kunststoff zum Vorsehen des wenigstens einen Verstärkungselementes an dem Kunststoffhohlkörper während des Blasformens dem wenigstens einen Verstärkungselement zur Herstellung einer Verbindung mit diesem annähert.

Die Verbindung zwischen dem den Kunststoffhohlkörper bildenden Kunststoff und dem Verstärkungselement kann dabei auf verschiedene Weisen erfolgen. So kann sich der den Kunststoffhohlkörper bildende Kunststoff beim Blasformen sowohl an die Wände der Blasformkavität als auch an Oberflächen des in die Blasformkavität eingelegten Verstärkungselementes anlegen und auf diese Weise eine form- oder/und kraftschlüssige Verbindung mit dem Verstärkungselement eingehen. Insbesondere bei der Verwendung kompatibler Werkstoffe für Kunststoffhohlkörper und Verstärkungselement kann es zusätzlich oder alternativ auch zu einer stoffschlüssigen Verbindung zwischen dem Verstärkungselement und dem den Kunststoffhohlkörper bildenden Kunststoff kommen.

Ein Vorteil dieses erfindungsgemäßen Verfahrens im Vergleich zum Stand der Technik besteht darin, dass das Vorsehen des Verstärkungselementes an dem Kunststoffhohlkörper und die Herstellung des Kunststoffhohlkörpers durch Blasformen in einem gemeinsamen Arbeitsschritt erfolgen. Weiterhin kann dieses Verfahren für eine große Anzahl verschiedener Formen und Ausgestaltungen von Kunststoffhohlkörper und Verstärkungselementen angewendet werden.

Gemäß einer vorteilhaften Weiterbildung der vorliegenden Erfindung wird das wenigstens eine Verstärkungselement derart in die Blasformkavität eingelegt, dass nach dem Einlegen zumindest ein Abschnitt des wenigstens einen Verstärkungselements bezogen auf einen an diesen Abschnitt des eingelegten Verstärkungselements angrenzenden Wandabschnitt der Blasformkavität in das Innere der Blasformkavität vorsteht. Auf diese Weise kann ermöglicht werden, dass es beim Anlegen des den Kunststoffhohlkörper bildenden Kunststoffs an den Abschnitt des Verstärkungselements und den daran angrenzenden Wandabschnitt der Blasformkavität wenigstens in diesem vorstehenden Verstärkungselementabschnitt zu einer formschlüssigen Verbindung zwischen dem den Kunststoffhohlkörper bildenden Kunststoff und dem Verstärkungselement kommt.

Gemäß einer vorteilhaften Weiterbildung der vorliegenden Erfindung umfasst das Verfahren als weiteren Schritt ein wenigstens abschnittsweises Überspritzen des wenigstens einen Verstärkungselementes durch Spritzgießen. Durch das Überspritzen des Verstärkungselementes wird die Position des Verstärkungselementes an dem Kunststoffhohlkörper zusätzlich gesichert.

Dabei kann grundsätzlich daran gedacht sein, dass das wenigstens eine Verstärkungselement in einer Spritzgießkavität überspritzt wird, welche in einem gesondert von dem Blas-Formwerkzeug, in dem der Hohlkörperrohling blasgeformt wird, ausgebildeten Spritzgieß-Formwerkzeug vorgesehen ist. So kann grundsätzlich der Hohlkörperrohling zunächst in der Blasformkavität des Blas-Formwerkzeugs, in die zuvor das wenigstens eine Verstärkungselement eingelegt wurde, blasgeformt werden, und der resultierende Kunststoffhohlkörper kann anschließend nach dem Öffnen des Blas-Formwerkzeuges zusammen mit dem Verstärkungselement aus der Blasformkavität entnommen und in das Spritzgieß-Formwerkzeug mit der Spritzgießkavität eingelegt werden, in der das Verstärkungselement dann mit Spritzgießmaterial überspritzt wird.

Besonders bevorzugt sind jedoch die Blasformkavität zum Blasformen des Kunststoffhohlkörpers und die Spritzgießkavität zum Überspritzen des wenigstens einen Verstärkungselementes in ein und demselben Formwerkzeug ausgebildet. Auf diese Weise wird nur ein Formwerkzeug benötigt und die Herstellungszeit des mit einem Verstärkungselement versehenen Kunststoffhohlkörpers verkürzt, da der Transfer zwischen verschiedenen Formwerkzeugen entfällt.

Gemäß einer bevorzugten Weiterbildung der vorliegenden Erfindung wird während des Spritzgießens die Wandung der Spritzgießkavität wenigstens abschnittsweise durch das wenigstens eine Verstärkungselement und durch den blasgeformten Kunststoff des Kunststoffhohlkörpers gebildet. Auf diese Weise kann die in die Spritzgießkavität eingefüllte Spritzgießmasse sowohl Kunststoffhohlkörper als auch Verstärkungselement benetzen, was die Voraussetzung für eine form- oder/und stoffschlüssigen Verbindung von Kunststoffhohlkörper und Verstärkungselement unter Vermittlung der Spritzgießmasse schafft. Der Begriff "blasgeformter Kunststoff" bedeutet in diesem Zusammenhang, dass wenigstens ein Abschnitt der Wandung der Spritzgießkavität durch Kunststoff des Kunststoffhohlkörpers in einem Bereich gebildet wird, in dem der Kunststoffhohlkörper durch Blasformen geformt wird.

Um das Verstärkungselement durch Spritzgießen mit dem Kunststoffhohlkörper zu verbinden, ist es vorteilhaft, wenn das Spritzgießmaterial und das Material des Kunststoffhohlkörpers eine gute Verbindung miteinander eingehen können. Dies kann mit besonders einfachen Mitteln dadurch erreicht werden, dass sich der Schritt des Spritzgießens und der Schritt des Blasformens derart zeitlich überlappen, dass der Beginn des Spritzgießens nach dem Beginn des Blasformens und vor dem Ende des Blasformens liegt. Auf diese Weise kann sichergestellt werden, dass die Spritzgießmasse und der Kunststoff des Kunststoffhohlkörpers in einem Zustand aufeinander treffen, in dem beide Materialien plastisch verformbar sind und sich gut miteinander verbinden, insbesondere im Falle der Verwendung kompatibler Werkstoffe für Spritzgießmasse und den Kunststoff des Kunststoffhohlkörpers. Besonders bevorzugt umfasst auch das Verstärkungselement ein Material, welches kompatibel zum Material der Spritzgießmasse und zum Material des Kunststoffhohlkörpers ist.

Dabei soll als Beginn des Blasformens das Einleiten von Blasluft in den Innenbereich des Hohlkörperrohlings angesehen werden, als Beginn des Spritzgießens der Beginn der Druckerhöhung des einzuspritzenden Kunststoffmaterials. Als Ende des Blasformens wird dabei das Ende der Formänderung des Hohlkörperrohlings angesehen. Der Blasformgebungsschritt endet daher, wenn sich der Hohlkörperrohling an die Blasformkavitätwand derart angelegt hat, dass trotz Überdruck im Innenbereich des Hohlkörperrohlings gegenüber dem Umgebungsdruck keine weitere blasluftbedingte Formänderung des Kunststoffhohlkörpers im Bereich der Blasformkavitätwand mehr erfolgt.

Im Allgemeinen bietet das erfindungsgemäße Verfahren im Vergleich zum Stand der Technik den Vorteil, dass es sich für eine große Anzahl von Kunststoffhohlkörpern und Verstärkungselementen verschiedener Form und Ausgestaltung eignet. Insbesondere kann Form und Material des Verstärkungselementes mit verhältnismäßig geringem Aufwand an den Verwendungszweck des mit dem Verstärkungselement versehenen Kunststoffhohlkörpers angepasst werden.

So kann daran gedacht sein, wenigstens ein Verstärkungselement in dem erfindungsgemäßen Verfahren zu verwenden, welches ein im Vergleich zum Material des Kunststoffhohlkörpers härteres Material umfasst, insbesondere ein Metall oder/und eine Keramik oder/und ein härteres Kunststoffmaterial. Auf diese Weise lässt sich die Stabilität und Festigkeit des mit dem Verstärkungselement versehenen Kunststoffhohlkörpers auf einfache Weise erhöhen.

Bei anderen Anforderungen an den mit wenigstens einem Verstärkungselement versehenen Kunststoffhohlkörper ist es zusätzlich oder alternativ möglich, dass das wenigstens eine Verstärkungselement ein Material umfasst, welches im Vergleich zum Material des Kunststoffhohlkörpers eine stärkere Dämpfung aufweist, insbesondere ein Elastomer, wie etwa Gummi, um den Kunststoffhohlkörper vor Beschädigung durch äußere Erschütterungen oder Stöße zu schützen.

Weiterhin ist es möglich, dass das Verstärkungselement ein Material mit hoher Zugfestigkeit umfasst, insbesondere Carbon- oder Kevlarfaserstoffe.

Generell kommen eine Vielzahl von Materialien wie thermo- oder duroplastische Kunststoffe oder auch Gummi für das Verstärkungselement in Frage.

Da nach dem erfindungsgemäßen Verfahren keine separate Montage des Verstärkungselementes an dem fertig geformten Kunststoffhohlkörper notwendig ist, besteht die Möglichkeit, einstückig ausgebildete und den Kunststoffhohlkörper in Umfangsrichtung um mehr als 180° umgebende, vorzugsweise vollständig umschließende, Verstärkungselemente zu verwenden, insbesondere in Form eines Ringes, mehrerer miteinander verbundener Ringe, einer Spiralfeder, eines Rohres oder eines Faltenbalges. Einstückige und den Kunststoffhohlkörper umschließende Verstärkungselemente bieten den Vorteil, den Kunststoffhohlkörper einerseits vollständig zu umgeben und zu verstärken, ohne an dem Verstärkungselement Schwachstellen, wie etwa Fügestellen vorsehen zu müssen, an denen einerseits besonders leicht Defekte am Verstärkungselement auftreten können und die andererseits besonders leicht Defekte am Kunststoffhohlkörper hervorrufen können, insbesondere wenn es sich um einen dünnwandigen Kunststoffhohlkörper handelt. Da keine Montage des Verstärkungselements an dem Kunststoffhohlkörper in einem separaten Arbeitsschritt notwendig ist, besteht insbesondere die Möglichkeit, starre einstückige Verbindungselemente zu verwenden, welche den Kunststoffhohlkörper vollständig umschließen.

Eine gute Stütz- und Verstärkungswirkung bei gleichzeitig geringem Gewicht und Bauvolumen lässt sich dadurch erreichen, dass das wenigstens eine Verstärkungselement eine netzartige, insbesondere eine gewebte, gestrickte oder gewirkte Struktur aufweist.

Schließlich ist es denkbar, dass an dem wenigstens einen Verstärkungselement wenigstens ein Funktionselement, insbesondere eine Befestigungslasche oder ein Kabelhalter vorgesehen ist. Auf diese Weise lässt sich in einem einzigen Arbeitsschritt der Kunststoffhohlkörper herstellen mit einem Verstärkungselement versehen und gleichzeitig ein Funktionselement an dem Kunststoffhohlkörper anbringen.

Gemäß einem zweiten Gesichtspunkt der vorliegenden Erfindung wird die oben genannte Aufgabe ebenfalls gelöst durch eine gattungsgemäße Vorrichtung zur Durchführung des erfindungsgemäßen Verfahrens, bei welcher die Blasformkavität dazu ausgebildet ist, wenigstens ein in die Blasformkavität einlegbares Verstärkungselement aufzunehmen. Eine vorteilhafte Positionssicherung des Verstärkungselementes kann dabei auf verschiedene Weisen erfolgen. So ist ein Form- oder auch ein Kraftschluss zwischen Verstärkungselement und entsprechenden Strukturen in der Blasformkavität möglich. Denkbar sind zum Beispiel Ausnehmungen oder Ausstülpungen in einer zweiteiligen Blasformkavität, so dass das Verstärkungselement vor dem Schließen des Formwerkzeugs in die Ausnehmung bzw. zwischen die Ausstülpungen in einer Formhälfte der Blasformkavität eingebracht werden kann, wonach das Formwerkzeug geschlossen wird.

Gemäß einer vorteilhaften Weiterbildung der vorliegenden Erfindung weist daher eine Wand der Blasformkavität wenigstens eine Ausnehmung auf, die dazu ausgebildet ist, das wenigstens eine Verstärkungselement aufzunehmen.

Gemäß einer weiteren vorteilhaften Weiterbildung der vorliegenden Erfindung weist die Vorrichtung wenigstens ein Verstärkungselement auf, wobei das wenigstens eine Verstärkungselement längs wenigstens eines Verstärkungselement-Umfangsabschnitts eine größere radiale Abmessung aufweist als ein dem Verstärkungselement-Umfangsabschnitt zugeordneter Ausnehmungs-Umfangsabschnitt, der zur Aufnahme des Verstärkungselement-Umfangsabschnitts ausgebildet ist. Auf diese Weise ragt der Verstärkungselement-Umfangsabschnitt des in die Ausnehmung eingelegten Verstärkungselementes, bezogen auf einen Wandabschnitt der Blasformkavität, der an den Verstärkungselement-Umfangsabschnitt angrenzt, in das Innere der Blasformkavität vor, was es ermöglicht, dass es beim Anlegen des den Kunststoffhohlkörper bildenden Kunststoffs an den Verstärkungselement-Umfangsabschnitt und an den daran angrenzenden Wandabschnitt der Blasformkavität zu einer formschlüssigen Verbindung zwischen dem den Kunststoffhohlkörper bildenden Kunststoff und dem Verstärkungselement zumindest in diesem Verstärkungselement-Umfangsabschnitt kommt.

Weiterhin ist es möglich, Kunststoffhohlkörper ein und derselben Gestalt auf einfache und schnelle Weise mit verschiedenartig geformten oder ausgestalteten Verstärkungselementen zu versehen, indem ein modular aufgebautes Formwerkzeug verwendet wird, bei welchem die Blasformkavität wenigstens eine Aufnahme für einen Verstärkungselement-Einsatz umfasst. In diese Aufnahme können nun je nach gewünschtem Verstärkungselement verschiedenartige Verstärkungselement-Einsätze eingelegt werden, die wiederum dazu ausgebildet sind, ein ihnen jeweils zugeordnetes Verstärkungselement vorbestimmter Gestalt aufzunehmen.

Für ferromagnetische Verstärkungselemente ist darüber hinaus eine magnetische Positionssicherung vorstellbar.

Gemäß einer vorteilhaften Weiterbildung der vorliegenden Erfindung ist die Blasformkavität zur Herstellung eines Kunststoffhohlkörpers ausgebildet, der sich wenigstens in einem Krümmungs-Teilbereich längs einer gekrümmten Längsachse erstreckt. Die Blasformkavität ist weiterhin dazu ausgebildet, das wenigstens eine Verstärkungselement, vorzugsweise mehrere Verstärkungselemente, vorzugsweise positionsgesichert, in wenigstens einem Teilbereich der Blasformkavität aufzunehmen, in dem der Krümmungs-Teilbereich des Kunststoffhohlkörpers geformt wird. Die erfindungsgemäße Vorrichtung bietet gegenüber dem Stand der Technik den Vorteil, dass sich mit ihr auch sehr komplex geformte Kunststoffhohlkörper mit Verstärkungselementen an genau der gewünschten Position versehen lassen. Ein bevorzugtes Ausführungsbeispiel ist ein gekrümmtes Rohr mit Verstärkungselementen im Krümmungsbereich.

Das oben erläuterte erfindungsgemäße Verfahren und die zuvor beschriebene erfindungsgemäße Vorrichtung sind dazu geeignet, folgende besonders vorteilhafte Kunststoffhohlkörper zu erzeugen:

So lässt sich nach der Lehre der vorliegenden Erfindung ein mit wenigstens einem Verstärkungselement versehener Kunststoffhohlkörper herstellen, wobei das Verstärkungselement derart mit thermoplastischem Kunststoff überspritzt ist, dass es, betrachtet in einer die Längsachse des Kunststoffhohlkörpers enthaltenden oder, im Falle einer gekrümmten Längsachse, zu dieser tangentialen Schnittebene, zumindest in einem Umfangsabschnitt vollständig von Kunststoff umschlossen ist. Bei diesem das Verstärkungselement zumindest in einem Umfangsabschnitt umschließenden Kunststoff handelt es sich um den thermoplastischen Kunststoff der Spritzgießmasse oder um eine Kombination aus thermoplastischem Kunststoff der Spritzgießmasse und dem den Kunststoffhohlkörper bildenden Kunststoff.

Weiterhin lässt sich nach der Lehre der vorliegenden Erfindung ein mit wenigstens einem Verstärkungselement versehener Kunststoffhohlkörper erzeugen, wobei an dem wenigstens einem Verstärkungselement wenigstens ein Funktionselement vorgesehen ist, insbesondere eine Befestigungslasche oder ein Kabelhalter.

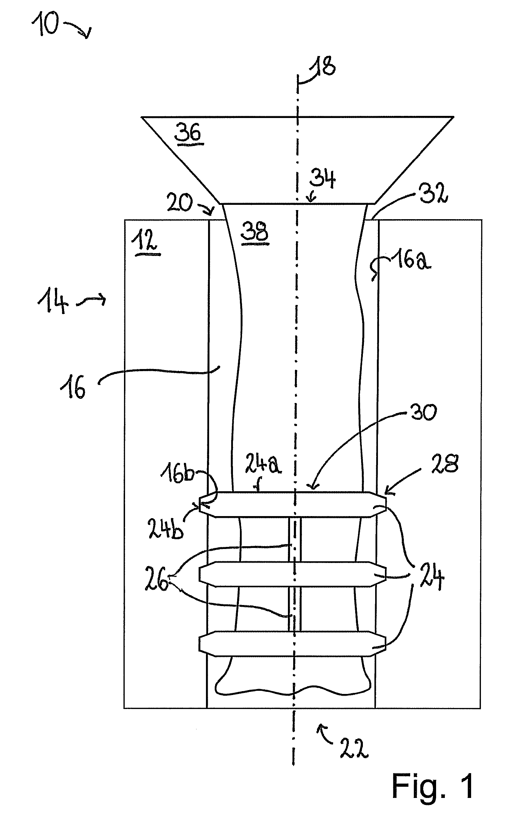

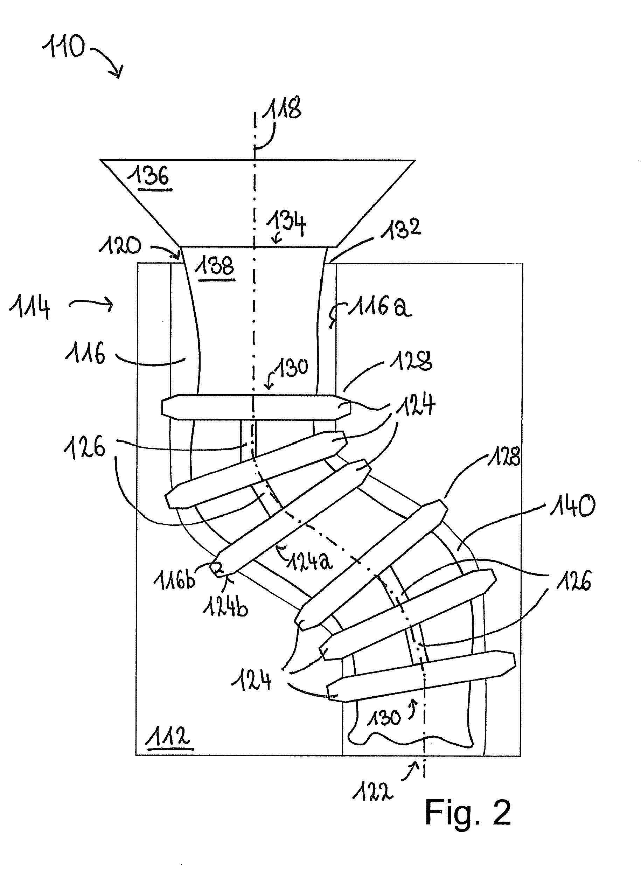

Nachfolgend wird die vorliegende Erfindung anhand von zwei Ausführungsbeispielen in den beiliegenden Figuren 1 und 2 näher erläutert.
- Fig. 1: zeigt eine schematische Draufsicht auf einen wesentlichen Ausschnitt einer ersten erfindungsgemäßen Ausführungsform einer Vorrichtung zur Herstellung eines blasgeformten, mit wenigstens einem Verstärkungselement versehenen Kunststoffhohlkörpers.
- Fig. 2: zeigt eine schematische Draufsicht auf einen wesentlichen Ausschnitt einer zweiten erfindungsgemäßen Ausführungsform einer Vorrichtung zur Herstellung eines blasgeformten mit wenigstens einem Verstärkungselement versehenen Kunststoffhohlkörpers.

In Figur 1 ist die dargestellte erste Ausführungsform der vorliegenden Erfindung in Form einer Blasformvorrichtung zur Herstellung eines mit wenigstens einem Verstärkungselement versehenen Kunststoffhohlkörpers allgemein mit 10 bezeichnet. Dargestellt ist eine Formhälfte 12 eines zweiteiligen Formwerkzeuges 14 mit einer Blasformkavität 16. Die Trennebene der zwei Formhälften des zweiteiligen Formwerkzeuges 14 ist dabei parallel zur Zeichenebene von Figur 1. Die zweite Formhälfte des Formwerkzeuges 14 ist in Figur 1 nicht dargestellt, um den Blick auf das Innere der Blasformkavität 16 freizugeben.

Die Blasformkavität 16 erstreckt sich im Wesentlichen geradlinig längs einer Blasformkavitätslängsachse 18 von einem ersten Längsende 20 zu einem zweiten Längsende 22 der Blasformkavität 16.

In einem dem zweiten Längsende 22 der Blasformkavität 16 nahen Bereich der Blasformkavität 16 sind drei Verstärkungsringe 24 so in die Blasformkavität 16 eingelegt, dass die Blasformkavitätslängsachse 18 im Wesentlichen senkrecht zu den von den Verstärkungsringen 24 eingeschlossenen Kreisflächen und durch die Mittelpunkte der Verstärkungsringe 24 hindurch verläuft. Aufgrund des geradlinigen Verlaufs der Blasformkavitätslängsachse sind die Verstärkungsringe 24 im Wesentlichen parallel zueinander angeordnet. In Richtung der Blasformkavitätslängsachse 18 sind die Verstärkungsringe 24 über streifenförmige Verbindungselemente 26 miteinander verbunden. Zusammen bilden die Verstärkungsringe 24 und die Verbindungselemente 26 ein Verstärkungselement 28, welches einen zentralen Hohlraum 30 aufweist.

In der Wand 16a der Blasformkavität 16 befinden sich drei ringförmige Ausnehmungen 16b, die im Wesentlichen komplementär zu radial am weitesten außen liegenden Abschnitten 24b der Oberflächen 24a der Verstärkungsringe 24 ausgebildet sind. Diese ringförmigen Ausnehmungen 16b dienen dazu, die Verstärkungsringe 24 positionsgesichert aufzunehmen. Aus Gründen der Übersichtlichkeit wurden die Ausnehmungen 16b in der Wand 16a der Blasformkavität 16 und die Oberflächen 24a der Verstärkungsringe 24 sowie die Abschnitte 24b dieser Oberflächen 24a nur beispielhaft für einen der dargestellten Verstärkungsringe 24 mit Bezugszeichen versehen. Weiterhin ist es möglich, in Figur 1 jedoch nicht dargestellt, dass die Wand 16a der Blasformkavität 16 weitere Ausnehmungen enthält, welche im Wesentlichen komplementär zur Oberfläche der Verbindungselemente 26 ausgebildet sind und die zu deren positionsgesicherter Aufnahme dienen.

Im Bereich des ersten Längsendes 20 der Blasformkavitätslängsachse 18 befindet sich eine Öffnung 32 in der Blasformkavität 16, über die die Blasformkavität 16 in Wirkverbindung mit einer Blas- und Extrusionsdüse 34 eines Blasextruders 36 steht, der in Figur 1 nur abschnittsweise dargestellt ist.

Die Blas-und Extrusionsdüse 34 umfasst, in der in Figur 1 dargestellten Draufsicht nicht erkennbar, eine Extrusionsöffnung sowie wenigstens eine Blasöffnung.

In dem in Figur 1 dargestellten Zustand ist aus der Extrusionsöffnung der Blas- und Extrusionsdüse 34 ein Hohlkörperrohling 38 aus thermoplastischem Kunststoff im plastisch verformbaren Zustand in das Innere der Blasformkavität 16 und durch die zentrale Öffnung 30 des Verstärkungselementes 28 hindurch extrudiert worden. Ausgehend von diesem in Figur 1 dargestellte Zustand wird durch die Blasöffnung der Blas- und Extrusionsdüse 34 Blasluft mit Überdruck bezogen auf die Umgebung in das Innere des Hohlkörperrohlings 38 eingeleitet. Unter dem Einfluss des Druckes der Blasluft bewegen sich die Wände des Hohlkörperrohling 38 auf die Innenwand 16a der Blasformkavität 16 und auf das Verstärkungselement 28 zu, so dass sich nach dem Ende des Blasformprozesses die Wände des Hohlkörperrohlings 38 so an die Wand 16a der Blasformkavität 16 sowie an den Abschnitt der Oberfläche des Verstärkungselementes 28, der nicht in direktem Kontakt mit der Blasformkavität 16 steht, angelegt haben, dass die Position des Verstärkungselementes 28 an dem blasgeformten Kunststoffhohlkörper weitgehend fixiert ist. Dabei ist es möglich, dass Kunststoffhohlkörper und Verstärkungselement 28 in einer form-, kraft- oder stoffschlüssigen Verbindung miteinander stehen, die jede Relativbewegung zwischen Kunststoffhohlkörper und Verstärkungselement 28 verhindert. Es ist jedoch auch möglich, dass sich das Verstärkungselement 28, gegebenenfalls unter Krafteinwirkung, innerhalb eines vorbestimmten Bewegungsbereichs relativ zu dem Kunststoffhohlkörper bewegen lässt, wobei es jedoch nur unter erheblicher Krafteinwirkung oder/und Beschädigung des Kunststoffhohlkörpers oder des Verstärkungselements 28 möglich ist, das Verstärkungselement 28 vom Kunststoffhohlkörper zu entfernen.

Weiterhin ist es je nach Gestaltung des Verstärkungselementes 28 auch möglich, dass das Verstärkungselement 28 im Blasformprozess zusätzlich formgebend auf den blasgeformten Hohlkörperrohling 38 wirkt, etwa zu einer Querschnittsverringerung des Hohlraumes des blasgeformten Kunststoffhohlkörpers im Bereich des Verstärkungselements 28 führt.

Figur 2 zeigt eine zweite allgemein mit 110 bezeichnete Ausführungsform einer erfindungsgemäßen Vorrichtung. Bauteile der zweiten Ausführungsform 110, die funktionsidentisch zu entsprechenden Bauteilen aus der ersten Ausführungsform 10 sind, wurden mit Bezugszeichen versehen, die jeweils durch Addition der Zahl 100 aus den Bezugszeichen der entsprechenden Bauteile der ersten Ausführungsform hervorgehen, auf deren Beschreibung ausdrücklich verwiesen wird. Die zweite Ausführungsform 110 wird nur insoweit näher diskutiert, als sie sich von der ersten Ausführungsform 10 unterscheidet.

Auch bei der zweiten Ausführungsform 110 der erfindungsgemäßen Vorrichtung handelt es sich um eine Blasformvorrichtung mit einem zweiteiligen Formwerkzeug 114, von dem in Figur 2 nur eine Formhälfte 112 dargestellt ist, um den Blick auf die Blasformkavität 116 zu ermöglichen. Die Trennebene der Formhälften ist parallel zur Zeichenebene von Figur 2.

Die Blasformkavität 116 erstreckt sich auch in diesem zweiten Ausführungsbeispiel längs einer Blasformkavitätslängsachse 118, die jedoch im Gegensatz zur Längsachse 18 der ersten Ausführungsform nicht geradlinig, sondern in einem Krümmungsbereich 140 der Blasformkavität 116 gekrümmt verläuft, wobei die Krümmung die Form eines langgestreckten "S" aufweist.

Im Krümmungsbereich 140 der Blasformkavität 116 sind zwei Verstärkungselemente 128 positionsgesichert aufgenommen, die wie die Verstärkungselemente 28 aus dem ersten Ausführungsbeispiel jeweils aus drei Verstärkungsringen 124 bestehen, die über streifenförmige Verbindungselemente 126 miteinander verbunden sind. Wiederum sind die einzelnen Verstärkungsringe 124 so ausgerichtet, dass die Blasformkavitätslängsachse 118 im Wesentlichen senkrecht zu den von den Verstärkungsringen 124 eingeschlossenen Kreisflächen und im Wesentlichen durch die Mittelpunkte der Verstärkungsringe 124 verläuft. Da die Biasformkavitätstängsachse 118 jedoch gekrümmt verläuft und die Verstärkungsringe 124 im Krümmungsbereich 140 angeordnet sind, sind die einzelnen Verstärkungsringe 124 nicht mehr parallel zueinander.

Es ist denkbar, dass für die Ausführungsbeispiele in den Figuren 1 und 2 gleiche oder zumindest ähnliche Verstärkungselemente 128 verwendet werden, wenn die Verstärkungsstreifen 126 die Verstärkungsringe 124 nicht starr, sondern elastisch oder plastisch verformbar verbinden, etwa durch die Verwendung von elastisch oder plastisch verformbaren Materialien für die Verbindungsstreifen 126 bzw. 26.

Die Verbindungsringe 124 sind wiederum positionsgesichert in ringförmigen Ausnehmungen 116b an der Innenwand 116a der Blasformkavität 116 aufgenommen.

Figur 2 macht deutlich, dass mit dem erfindungsgemäßen Verfahren und der erfindungsgemäßen Vorrichtung auch kompliziert geformte Kunststoffhohlkörper, insbesondere Kunststoffrohre komplexer Geometrie, hergestellt werden können, die auch in Krümmungsbereichen mit dem erfindungsgemäßen Verfahren auf einfache Weise mit Verstärkungselementen 128 versehen werden können. Das erfindungsgemäße Verfahren und die erfindungsgemäße Vorrichtung sind nicht auf die dargestellten, ringförmigen oder aus ringförmigen Elementen zusammengesetzten Verstärkungselemente 128 beschränkt, sondern können für eine große Anzahl verschieden geformter und ausgestalteter Verstärkungselemente verwendet werden.

## Patentansprüche

1. Verfahren zur Herstellung eines mit wenigstens einem Verstärkungselement (28; 128) versehenen Kunststoffhohlkörpers in einem Formwerkzeug (14; 114), umfassend die folgenden Schritte:
- Einbringen eines Hohlkörperrohlings (38; 138) aus thermoplastischem Kunststoff im plastisch verformbaren Zustand in eine Blasformkavität (16; 116) des Formwerkzeugs (14; 114).
- Blasformen des Hohlkörperrohlings (38; 138) in der Blasformkavität (16; 116) zu dem Kunststoffhohlkörper,
- Vorsehen des wenigstens einen Verstärkungselements (28; 128) an dem den Kunststoffhohlkörper bildenden Kunststoff,
**dadurch gekennzeichnet, dass** das Verfahren vor dem Blasformen folgenden zusätzlichen Schritt umfasst:
- Einlegen des wenigstens einen Verstärkungselements (28; 128) in die Blasformkavität (16; 116), so dass sich der den Kunststoffhohlkörper bildende Kunststoff zum Vorsehen des wenigstens einen Verstärkungselements (28; 128) an dem Kunststoffhohlkörper während des Blasformens dem wenigstens einen Verstärkungselement (28; 128) zur Herstellung einer Verbindung mit diesem annähert.

2. Verfahren nach Anspruch 1,
**dadurch gekennzeichnet, dass** es folgenden weiteren Schritt umfasst:
- wenigstens abschnittsweises Überspritzen des wenigstens einen Verstärkungselements (28; 128) durch Spritzgießen.

3. Verfahren nach Anspruch 2,
**dadurch gekennzeichnet, dass** während des Spritzgießens die Wandung der Spritzgießkavität wenigstens abschnittsweise durch das wenigstens eine Verstärkungselement (28; 128) und durch den blasgeformten Kunststoff des Kunststoffhohlkörpers gebildet wird.

4. Verfahren nach Anspruch 2 oder 3,
**dadurch gekennzeichnet, dass** sich der Schritt des Spritzgießens und der Schritt des Blasformens derart zeitlich überlappen, dass der Beginn des Spritzgießens nach dem Beginn des Blasformens und vor dem Ende des Blasformens liegt.

5. Verfahren nach einem der Ansprüche 1 bis 4,
**dadurch gekennzeichnet, dass** das wenigstens eine Verstärkungselement (28; 128) ein im Vergleich zum Material des Kunststoffhohlkörpers härteres Material umfasst, insbesondere Metall oder/und Keramik oder/und Kunststoff.

6. Verfahren nach einem der Ansprüche 1 bis 5,
**dadurch gekennzeichnet, dass** das wenigstens eine Verstärkungselement (28; 128) ein Material umfasst, welches im Vergleich zum Material des Kunststoffhohlkörpers eine stärkere Dämpfung aufweist, insbesondere ein Elastomer, wie etwa Gummi.

7. Verfahren nach einem der vorhergehenden Ansprüche,
**dadurch gekennzeichnet, dass** das wenigstens eine Verstärkungselement (28; 128) einstückig und den Kunststoffhohlkörper umschließend ausgebildet ist, insbesondere in Form eines Ringes, mehrerer miteinander verbundener Ringe (24; 124), einer Spiralfeder, eines Rohres oder eines Faltenbalges.

8. Verfahren nach einem der vorhergehenden Ansprüche,
**dadurch gekennzeichnet, dass** das wenigstens eine Verstärkungselement (28; 128) eine netzartige, insbesondere eine gewebte, gestrickte oder gewirkte, Struktur aufweist.

9. Verfahren nach einem der vorhergehenden Ansprüche,
**dadurch gekennzeichnet, dass** an dem wenigstens einen Verstärkungselement (28; 128) wenigstens ein Funktionselement, insbesondere eine Befestigungslasche oder einen Kabelhalter, vorgesehen ist.

10. Vorrichtung zur Durchführung des Verfahrens gemäß einem der vorhergehenden Ansprüche, umfassend
- ein Formwerkzeug (14; 114) mit einer Blasformkavität (16; 116) und
- eine Blasvorrichtung zum Blasformen eines Hohlkörperrohlings (38; 138) in der Blasformkavität (16; 116),
**dadurch gekennzeichnet, dass** die Blasformkavität (16; 116) dazu ausgebildet ist, wenigstens ein in die Blasformkavität (16; 116) einlegbares Verstärkungselement (28; 128) aufzunehmen.

11. Vorrichtung nach Anspruch 10,
**dadurch gekennzeichnet, dass** eine Wand (16a; 116a) der Blasformkavität (16; 116) wenigstens eine Ausnehmung (16b; 116b) aufweist, die dazu ausgebildet ist, das wenigstens eine Verstärkungselement (28; 128) aufzunehmen.

12. Vorrichtung nach Anspruch 11,
**dadurch gekennzeichnet, dass** sie wenigstens ein Verstärkungselement (28; 128) aufweist, wobei das wenigstens eine Verstärkungselement (28; 128) längs wenigstens eines Verstärkungselement-Umfangsabschnitts eine größere radiale Abmessung aufweist als ein dem Verstärkungselement-Umfangsabschnitt zugeordneter Ausnehmungs-Umfangsabschnitt, der zur Aufnahme des Verstärkungselement-Umfangsabschnitts ausgebildet ist.

13. Vorrichtung nach einem der Ansprüche 10 bis 12,
**dadurch gekennzeichnet, dass** die Blasformkavität (116) zur Herstellung eines Kunststoffhohlkörpers ausgebildet ist, der sich wenigstens in einem Krümmungs-Teilbereich längs einer gekrümmten Längsachse erstreckt, und dass die Blasformkavität (116) weiterhin dazu ausgebildet ist, das wenigstens eine Verstärkungselement (128), vorzugsweise mehrere Verstärkungselemente (128), in wenigstens einem Teilbereich (140) der Blasformkavität (116) aufzunehmen, der dem Krümmungs-Teilbereich des Kunststoffhohlkörpers zugeordnet ist.
